# EUROPÄISCHE PATENTSCHRIFT

(11) **EP 2 301 202 B1**
(45) Veröffentlichungstag und Bekanntmachung des Hinweises auf die Patenterteilung: **31.05.2017**
(21) Anmeldenummer: 08735265.4
(22) Anmeldetag: 16.04.2008
(51) Int. Cl.: H04L 12/43, H04L 12/437, H04L 12/46, B61L 19/00, B61L 19/06, B61L 21/04, B61L 27/00

(54) **EINRICHTUNG ZUR STEUERUNG UND/ODER ÜBERWACHUNG UND DATENABFRAGE VON ENTLANG EINES VERKEHRSNETZWERKS ANGEORDNETEN DEZENTRALEN FUNKTIONSEINHEITEN**
DEVICE FOR CONTROLLING AND/OR MONITORING AND DATA RETRIEVAL FROM LOCAL FUNCTIONAL UNITS ALONG A COMMUNICATION NETWORK
DISPOSITIF DE COMMANDE ET/OU DE SURVEILLANCE ET DE DEMANDE DE DONNÉES À PARTIR D'UNITÉS DE FONCTION DÉCENTRALISÉES AGENCÉES LE LONG D'UN RÉSEAU DE TRAFIC

(30) Priorität: 24.05.2007 EP 07010322
(43) Veröffentlichungstag der Anmeldung: 30.03.2011
(73) Patentinhaber: Siemens Schweiz AG, 8047 Zürich (CH)
(72) Erfinder: REICHLIN, Anton, CH-8400 Winterthur (CH); WOHLGEMUTH, Rolf, CH-8303 Bassersdorf (CH)
(74) Vertreter: Maier, Daniel Oliver
(86) Internationale Anmeldenummer: PCT/EP2008/003014
(87) Internationale Veröffentlichungsnummer: WO 2008/141706

(56) Entgegenhaltungen:
- EP-A- 0 893 894
- DE-A1- 2 402 932
- JP-A- 2000 004 248
- JP-A- 2001 151 114
- JP-A- 2006 281 960
- US-A- 5 218 604
- JAEKEL B W: "Investigation and control methods for the EMC of electronic interlocking systems in the railway environment" ELECTROMAGNETIC COMPATIBILITY, 2003. EMC '03. 2003 IEEE INTERNATIONAL SYMPOSIUM ON ISTANBUL, TURKEY 11-16 MAY 2003, PISCATAWAY, NJ, USA,IEEE, Bd. 1, 11. Mai 2003 (2003-05-11), Seiten 418-421, XP010795709 ISBN: 0-7803-7779-6
- SHI J J ED - INSTITUTE OF ELECTRICAL & ELECTRONICS ENGINEERS: "INTERCONNECTION OF SELF-HEALING RINGS" 1996 IEEE INTERNATIONAL CONFERENCE ON COMMUNICATIONS (ICC). CONVERGING TECHNOLOGIES FOR TOMORROW'S APPLICATIONS. DALLAS, JUNE 23 - 27, 1996, IEEE INTERNATIONAL CONFERENCE ON COMMUNICATIONS (ICC), NEW YORK, IEEE, US, Bd. VOL. 3, 23. Juni 1996 (1996-06-23), Seiten 1563-1567, XP000625073 ISBN: 0-7803-3251-2

## Beschreibung

Die vorliegende Erfindung bezieht sich auf eine Einrichtung und ein Verfahren zur Steuerung und/oder Überwachung sowie zur Datenabfrage und zum Datenaustausch von entlang eines Verkehrsnetzwerks angeordneten dezentralen Funktionseinheiten.

Derartige dezentrale Funktionseinheiten werden im Besonderen in Schienenverkehrsnetzwerken z.B wie die Eisenbahn eingesetzt, wo diese genutzt werden, um Fahrzeug beeinflussende und/oder Fahrzeug überwachende Einheiten zu steuern und bezüglich der Funktionalität zu überwachen und um Prozessdaten aufzunehmen und zurück zu melden. Als zugbeeinflussende Einheiten, die also Anweisungen an den Fahrzeugführer geben oder sogar direkt Eingriffe in der Fahrzeugsteuerung vornehmen oder direkt einen sicheren Fahrweg einstellen, können beispielsweise Signale, Weichen, Balisen, Linienleiter, Gleismagnete und dergleichen sowie auch Sensoren zum Erfassen von Prozessgrössen des fahrenden Zuges, wie Leistungsaufnahme, Geschwindigkeit und dergleichen, betrachtet werden. Als Zug- und Gleisabschnitt überwachende Einheiten können ebenfalls Balisen und Linienleiter, aber auch Achszähler und Gleisstromkreise genannt werden.

Üblicherweise werden diese dezentralen Funktionseinheiten von einem Stellwerk oder einem abgesetzten Stellrechner gesteuert. Für den Datentransfer zwischen dem Stellwerk und den Funktionseinheiten im Gleisbereich sind heute in der Regel standardisierte Kupferkabel vorgesehen, für deren klassische Stelldistanzlängen wegen der physikalischen Übertragungsparameter, den Kabelbelägen (RLC), bei 10 km in der Praxis die obere Grenze liegt. Bei gewissen Typen von Funktionseinheiten kann diese obere Limite jedoch auch nur bei maximal 6,5 km liegen.

Heutzutage stehen jedoch auch schon Datennetzwerke bei Eisenbahnen im Einsatz, welche dazu verwendet werden z.B. Daten unter benachbarten Stellwerken oder der Stellwerken und Leittechnik auszutauschen. Sie werden jedoch nicht in der Weise eingesetzt, um zugbeeinflussende und/oder zugüberwachende Funktionseinheiten zu steuern und zu überwachen, um dadurch eine Überbrückung von fast beliebigen Stelldistanzen zu ermöglichen. Diese Netzwerke sind vielmehr vom Typ eines Datentransportnetzwerkes (DTN), z.B. ein optisches Transportnetzwerkes, ausgestaltet und werden für die Übermittlung von Daten für die operationelle Betriebsebene und dergleichen eingesetzt.

Derartige Datennetzwerke erlauben eine sehr viel höhere Anzahl von Freiheitsgraden hinsichtlich
- der Festlegung der Position der Kopplungspunkte für den Anschluss von Stellwerk- und Leittechnikanlagen oder Teilen davon und somit dessen Aufstellungsorte,
- der angewandten Übertragungs-Verfahren und der Distanzen der Kommunikation unter verschiedenen Anlagenteilen.

Diese Datennetzzwerke ermöglichen so mitunter eine wesentliche Verbesserung beim Preis/Leistungsverhältnis und dennoch ein hoch zuverlässiger und entsprechend sicherer Datenaustausch der Eisenbahnsicherungseinrichtungen entlang von Gleisanlagen.

Anschauliche Anwendungsbeispiele für derartige Datennetzwerke sind Nebenstrecken oder Strecken mit ETCS Level 2 oder lange Tunnelstrecken, für die heute immer noch wegen der Limite bei den Stelldistanzlängen mit herkömmlichen Stellwerkkabeln eine Anordnung von Stellwerkrechnern innerhalb von Tunnels erforderlich macht. Die dort herrschenden rauen Einsatzbedingungen erfordern, dass die Stellwerkrechner in Kavernen oder Containern gekapselt und klimatisiert betrieben werden. Der Unterhalt ist in diesen Fällen entsprechend aufwendig.

Die ganze Problematik besteht also darin, dass bedingt durch die limitierten Stelldistanzen Stellwerk und

Aussenanlageteile nicht beliebig weit auseinander liegen können.

Die neuartigen Datennetzwerke haben jedoch einen Nachteil dahingehend, dass im Grunde jede zentrale und dezentrale Funktionseinheit in geeigneter Weise über einen Zugangspunkt und aus Gründen der Verfügbarkeit in redundanter Weise an ein solches Datennetzwerk angekoppelt werden muss. Damit ist momentan an einem einzelnen Netzwerkknoten für einen Anschluss einer Funktionseinheit ein vergleichsweise hoher Aufwand für die Kopplung mit dem Datennetzwerk erforderlich bei gleichzeitig nur vergleichsweise geringer Datentransferrate in Relation zur Netzwerkkapazität. Während heutige Glasfasernetze beispielsweise Übertragungsraten von GigaBit bis hin zu TeraBit Transferleistung zulassen, werden diesen Übertragungsraten bei diesen sicherungstechnischen Anwendungen jedoch nur sehr marginal genutzt.

Zugleich ist darüber hinaus durchaus ein wirtschaftliches Interesse seitens der Bahninfrastruktur-Betreiber erkennbar, die bestehenden sogenannten langlebigen Stellwerkkabel (an die Schienenwege angepasste Kupferkabel), welche heute für den Betrieb der Funktionseinheiten durch die Stellwerke eingesetzt werden, weiterhin für die Ansteuerung der Aussenanlagen zu nutzen. In diesem Zusammenhang offenbart die Druckschrift JP 2006 281960 A eine Einrichtung zur Steuerung und/oder Überwachung von entlang eines Verkehrsnetzwerks angeordneten dezentralen Funktionseinheiten. Weiterhin offenbart die Druckschrift EP 0 893 894 A2 eine sogenannte "dual hubbed hierarchical ring topology", in der Kommunikationsknoten in ringförmigen Subnetzwerken angeordnet sind. Aus diesen vorstehend genannten Gründen liegt daher der vorliegenden Erfindung die Aufgabe zugrunde, eine Einrichtung und ein Verfahren zur Steuerung und/oder Überwachung von entlang eines Verkehrsnetzwerks angeordneten dezentralen Funktionseinheiten anzugeben, die einerseits die Vorteile eines digitalen Datentransportnetzwerkes nutzbar machen und andererseits den damit verbundenen Aufwand, wie z.B. den Verkabelungsaufwand, bei gleichzeitig hoher Verfügbarkeit wesentlich verringern.

Diese Aufgabe wird bezüglich der Einrichtung erfindungsgemäss durch eine Einrichtung zur Steuerung und/oder Überwachung von entlang eines Verkehrsnetzwerks angeordneten dezentralen Funktionseinheiten gelöst, umfassend:
a) ein übergeordnetes Steuerungssystem, das mit den dezentralen Funktionseinheiten mittels Datentelegrammen Informationen austauscht,
b) ein ringförmiges Datentransportnetzwerk mit einer Anzahl von Netzzugangspunkten, wobei das übergeordnete Steuerungssystem über mindestens einen Netzzugangspunkt an dem ringförmigen Datentransportnetzwerk angekoppelt ist;
c) Kommunikationseinheiten, die jeweils an einem Netzzugangspunkt angeschlossen sind, wobei:
d) die dezentralen Funktionseinheiten zu Untergruppen mit jeweils eigenem Subnetzwerk zusammengefasst sind; und wobei
e) das Subnetzwerk jeder der Untergruppen an jedem seiner beiden Ende jeweils über eine Kommunikationseinheit und über einem Netzzugangspunkt an dem ringförmigen Datentransportnetzwerk angekoppelt ist.

Bezüglich des Verfahrens wird diese Aufgabe erfindungsgemäss durch ein Verfahren zur Steuerung und/oder Überwachung von entlang eines Verkehrsnetzwerks angeordneten dezentralen Funktionseinheiten gelöst, umfassend die Schritte:
a) Bereitstellen eines übergeordnetes Steuerungssystems, das mit den dezentralen Funktionseinheiten mittels Datentelegrammen Informationen austauscht,
b) Bereitstellen von einem ringförmigen Datentransportnetzwerk mit einer Anzahl von Netzzugangspunkten,
c) Bereitstellen von Kommunikationseinheiten, die an einem Netzzugangspunkt angeschlossen sind,
d) Zusammenfassen der dezentralen Funktionseinheiten zu Untergruppen mit jeweils eigenem Subnetzwerk; und
e) Ankoppeln der Subnetzwerke jeder der Untergruppen an jedem seiner beiden Ende jeweils über eine Kommunikationseinheit und über einen Netzzugangspunkt an dem ringförmigen Datentransportnetzwerk.

Auf diese Weise kann für die Ankopplung der dezentralen Funktionseinheiten ein digitales Transportnetzwerk genutzt werden, welches in jeder Weise robust gegen ein einfaches Fehlerereignis ist, dennoch eine sehr geschickte Verwendung von sehr breit in der Bahntechnik eingesetzten Cu-Kabeln, zum Beispiel bisher vorhandenen Stellwerkskabeln, erlaubt und schliesslich auch nur eine vergleichsweise geringe Zahl von Netzzugangspunkten benötigt.

Eine derartige Einrichtung ist dabei in besonders vorteilhafter Weise für ein Schienennetz für den Eisenbahnverkehr einsetzbar. Folglich ist dann in einer weiteren vorteilhaften Ausgestaltung zweckmässig, mittels den dezentralen Funktionseinheiten verkehrsüberwachende und verkehrssteuernde Funktionseinheiten, wie insbesondere Signale, Weichen, Achszähler, Gleisstromkreise, punkt- und linienförmige Zugbeeinflussungselemente, an das Datentransportnetzwerk anzukoppeln.

Die Dichte der räumlichen Anordnung von dezentralen Funktionseinheit ist naturgemäss in einem Eisenbahnnetzwerk sehr unterschiedlich und neben vielen anderen Faktoren auch von der Komplexität der Netztopologie abhängig. Diesem Umstand kann in einer weiteren vorteilhaften Ausgestaltung der Erfindung besonders gut Rechnung getragen werden, wenn eine erste Anschlussart für eine Untergruppe von dezentralen Funktionseinheit mit einer ersten mittleren Dichte pro Streckenflächeneinheit und die zweite Anschlussart für eine Untergruppe von dezentralen Funktionseinheiten mit einer zweiten mittleren Dichte pro Streckenflächeneinheit vorgesehen sind, wobei die erste mittlere Dichte grösser ist als die zweite mittlere Dichte. In einer konkreten Ausgestaltung dieses Merkmals kann es daher vorgesehen sein, dass die erste Anschlussart für in einem Bahnhofsbereich angeordnete dezentrale Funktionseinheiten vorgesehen ist und die zweite Anschlussart für auf freier Strecke angeordnete dezentrale Funktionseinheiten vorgesehen ist. So ist es beispielsweise möglich, dass der Leitungsstrang für die zweite Verbindungsart auf die jeweils von benachbarten Stellwerkwerken aufeinanderzulaufenden Stellwerkkabel zurückgreift und nur ein mittlerer Abschnitt einzusetzen ist, um die beiden Stellwerkkabel zu verbinden und so die Netzwerkschleife adernsparend zu realisieren.

Um die Aussendung von Datentelegrammen zu der dezentralen Funktionseinheit und von der dezentralen Funktionseinheit besonders einfach in redundanter Weise ausführen zu können, kann der Datentransport zu und von den dezentralen Funktionseinheiten (DFE) über beide Enden des Subnetzwerk gleichzeitig erfolgen. Ein zuerst an der dezentralen Funktionseinheit eintreffendes Datentelegramm und ein zuerst von der dezentralen Funktionseinheit an dem übergeordneten Steuerungssystem eintreffendes Datentelegramm wird dann für die weitere Verarbeitung verwertet; das zweite über den dann jeweils redundanten Weg eintreffende Datentelegramm wird verworfen. So können das übergeordnete Steuerungssystem und die dezentrale Funktionseinheit über entsprechende Verarbeitungs-Routinen verfügen, die eintreffende Datentelegramme dahingehend untersuchen, ob ein identisches Datentelegramm bereits zuvor empfangen worden ist.

Eine hierzu alternative Vorgehensweise kann es dann vorsehen, dass der Datentransport zu und von den dezentralen Funktionseinheiten (DFE) über eines der beiden Enden des Subnetzwerk vorgenommen wird, wobei im Falle eines Ausfalls der Kommunikationseinheit und/oder des Netzzugangspunktes an diesem Ende des Subnetzwerks auf einen Datentransport über das jeweils andere Ende des Subnetzwerkes umgeschaltet wird. Entsprechend wird im Falle eines Ausfalls einer dezentralen Funktionseinheit (DFE) und/oder im Fall eines Unterbruchs des Subnetzwerkes die dann vom Informationsfluss über das Transportnetzwerk (OTN) abgeschnittenen dezentralen Funktionseinheiten über das andere Ende des Subnetzwerks wieder in den Informationsfluss eingebunden.

Weitere vorteilhafte Ausgestaltungen der vorliegenden Erfindung sind den übrigen Unteransprüchen zu entnehmen.

Vorteilhafte Ausführungsbeispiele der vorliegenden Erfindung werden anhand der Zeichnung näher erläutert. Dabei zeigen:
- Figur 1: in schematischer Ansicht den Aufbau einer Einrichtung E zur Steuerung und/oder Überwachung von entlang eines Eisenbahnnetzwerkes angeordneten dezentralen Funktionseinheiten;
- Figur 2: in schematischer Ansicht einen Ausschnitt der Einrichtung gemäss Figur 1 mit einem ausgefallenen Netzzugangspunkt;
- Figur 3: in schematischer Ansicht einen Ausschnitt der Einrichtung gemäss Figur 1 mit einer ausgefallenen Kommunikationseinheit;
- Figur 4: in schematischer Ansicht einen Ausschnitt der Einrichtung gemäss Figur 1 mit einem unterbrochenen Subnetzwerk; und
- Figur 5: in schematischer Ansicht einen Ausschnitt der Einrichtung gemäss Figur 1 mit einer ausgefallenen Verbindungsgruppe.

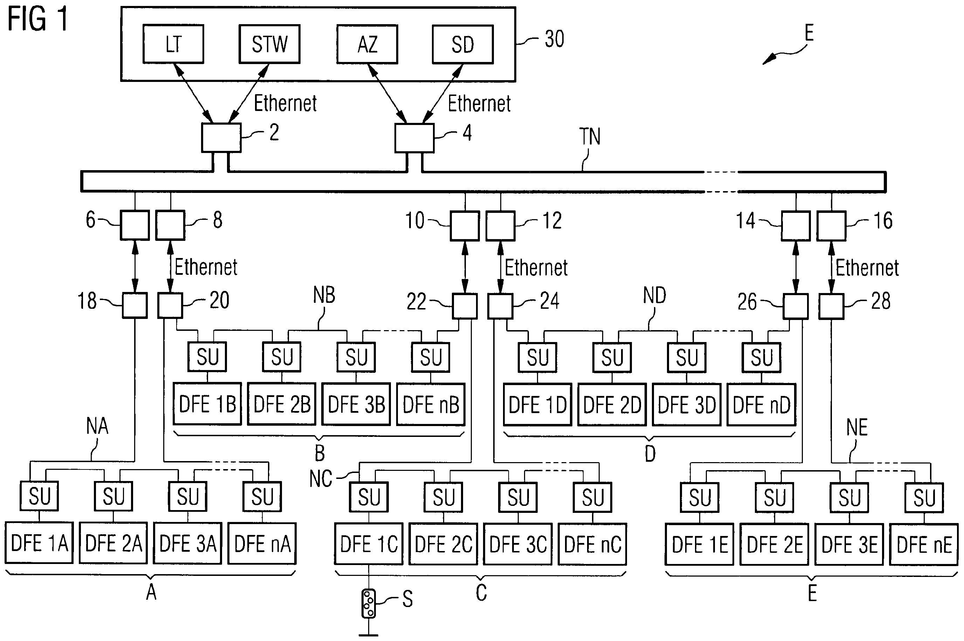

Figur 1 zeigt in schematischer Ansicht den Aufbau einer Einrichtung E zur Steuerung und/oder Überwachung von entlang eines Eisenbahnnetzwerkes (hier nicht weiter dargestellt) angeordneten dezentralen Funktionseinheiten DFE1A bis DFEnA, DFE1B bis DFEnB usw.. Sollte nicht eine bestimmte Funktionseinheit gemeint sein, werden die dezentralen Funktionseinheiten nachfolgend mit DFE bezeichnet. Derartige dezentrale Funktionseinheiten DFE werden genutzt, um zugbeeinflussenden und/oder zugüberwachende Einheiten zu steuern und zu überwachen. Als zugbeeinflussende Einheiten können beispielsweise Signale, Weichen, Balisen, Linienleiter, Gleismagnete und dergleichen genannt werden. Als zugüberwachende Einheiten können ebenfalls Balisen und Linienleiter, aber auch Achszähler und Gleisstromkreise genannt werden. Beispielhaft wird durch die dezentrale Funktionseinheit DFE1C ein Signal S gesteuert und überwacht. Die dezentrale Funktionseinheit steuert dabei die Anzeige der Signalbegriffe und führt respektive assistiert bei Überwachungsfunktionen, wie beispielsweise der Überwachung des Lampenstroms im Signal.

Jede dezentrale Funktionseinheit DFE respektive die von gesteuerte/überwachte Einheit verfügt im gesamten Netzwerk über eine eindeutige Adresse, beispielsweise eine IP-Adresse oder eine MAC-Adresse.

Die Einrichtung E umfasst weiter ein Datentransportnetzwerk TN mit einer Anzahl von Netzzugangspunkten 2 bis 16. An einem Teil dieser Netzzugangspunkte 6 bis 16 sind Kommunikationseinheiten 18 bis 28 angeschlossen. Das Datentransportnetzwerk TN ist hierbei als hochverfügbares Netzwerk ausgestaltet. Solche hochverfügbaren Strukturen können sich einerseits durch eine redundante Ausführung des Netzes selbst und/oder andererseits durch eine geschickte Re-Organisation des Netzes beim Ausfall eines Verbindungsstückes ergeben.

Ausserdem umfasst die Einrichtung E ein übergeordnetes Steuerungssystem 30, das neben anderen hier nicht weiter aufgeführten Komponenten eine Leitstelle LT, einen Stellwerkrechner STW, einen Achszählerrechner AZ und eine Service/Diagnose-Einheit SD umfasst, die die Netzzugangspunkte 2 und 4 mittels Ethernet-Verbindungen an das Datentransportnetzwerk TN angeschlossen sind.

Wie in der Figur gezeigt, müssen die dezentralen Funktionseinheiten DFE über eine der Kommunikationsgruppen 18 bis 28 und den entsprechende Netzwerkknoten 6 bis 16 an dem Transportnetzwerk TN angekoppelt sein und können so über dieses Datentelegramme erhalten oder austauschen. Die dezentralen Funktionseinheiten DFE sind dabei zu Untergruppen A, B, C, D und E mit jeweils eigenem Subnetzwerk NA, NB, NC, ND und NE zusammengefasst. Die Untergruppe A wird beispielsweise aus den dezentralen Funktionseinheiten DFE1A, DFE2A, DFE3A bis DFEnA gebildet. Dabei sind die Untergruppen A bis E immer an ihren beiden Enden mit je einer der Kommunikationsgruppen 18 bis 28 und einem Netzzugangspunkten 6 bis 16 verbunden. Jeder dezentralen Funktionseinheit DFE ist zudem ein Vermittlungsrechner SU, der alternativ auch direkt in die dezentrale Funktionseinheit DFE integriert sein kann, vorgeschaltet, welcher für die dezentralen Funktionseinheiten DFE den Anschluss an das Subnetzwerk bereitstellt, damit jede dezentrale Funktionseinheit DFE beim Ausfall einer Kommunikationsgruppe noch von einer zweiten redundanten Kommunikationsgruppe angesprochen werden kann.

Jedes Subnetzwerk (NA bis NE) ist somit aus einer Anzahl von Punkt-zu-Punkt-Verbindungen von logisch benachbarten dezentralen Funktionseinheiten (DFE) aufgebaut. Dabei ist eine Punkt-zu-Punkt-Verbindung als autonome Übertragungsstrecke innerhalb des Subnetzwerks ausgebildet, zum Beispiel als ISDN-Übertragungsstrecke oder als xDSL-Übertragungsstrecke oder LWL-Übertragungsstrecke. Somit kann ein einzelnes Subnetzwerk sozusagen aus einzelnen Übertragungszellen aufgebaut werden, die ihrerseits jeweils immer nur die Übertragung von Punkt zu Punkt beherrschen müssen. Mit anderen Worten gesprochen können so beispielsweise aus einfachen, eher kurzreichweitigen Übertragungstechniken auch ein viel längeres und komplexeres Subnetzwerk zusammengesetzt werden. Aus diesem Grund ist es zweckmässig, die Punkt-zu-Punkt-Verbindung an jedem Ende mit einem Vermittlungsmodul (SU) zu terminieren, wodurch sich sogar die Chance ergibt, die Punkt-zu-Punkt-Übertragungstechnik von Zelle zu Zelle zu ändern und so die jeweils geeigneteste Übertragungstechnik auswählen zu können. Ein geeignetes Vermittlungsmodul (SU) kann hierzu so ausgestaltet sein, dass es eine Anzahl von Punkt-zu-Punkt-Übertragungstechniken bereitstellt und in Abhängigkeit von der Beschaltung selbstorganisierend die durch die Beschaltung bestimmte Punkt-zu-Punkt-Übertragungstechnik bereitstellt.

Weiter sind die Untergruppen A bis E jeweils auf eine erste Anschlussart oder eine zweite Anschlussart an die zwei Kommunikationsgruppen 18 bis 28 angeschlossen. In der ersten Anschlussart, wie beispielsweise für die Untergruppen A, C und E gezeigt, wird das zugehörige Subnetzwerk NA, NC und NE in zwei geographisch dicht beieinanderliegenden Kommunikationsgruppen 18 und 20 bzw. 22 und 24 bzw. 26 und 28 terminiert, was in der Figur 1 durch die unmittelbare Nachbarschaft der Kommunikationsgruppenpaare 18, 20 und 22, 24 und 26, 28 gezeigt sein soll. In der zweiten Anschlussart, wie für die Untergruppen B und D gezeigt, wird das jeweilige Subnetzwerk NB bzw. ND mit den räumlich weiter auseinanderliegenden Kommunikationsgruppen 20, 22 bzw. 24, 26 terminiert. Auch hier ist dann jede Untergruppe B und D beim Ausfall einer der beiden zugehörigen Kommunikationsgruppen immer noch an einer weiteren Kommunikationsgruppe angeschlossen.

Nimmt man nun einmal an, dass die Netzzugangspunkte 6, 8 und 10, 12 und 14, 16 jeweils an Stationen des Eisenbahnnetzwerkes angeordnet sind, dann stellen die Untergruppen A, C und E eher die im Stationsbereich angeordneten dezentralen Funktionseinheiten DFE dar. Die Untergruppen B und D repräsentieren eher solche dezentrale Funktionseinheiten DFE, die im Bereich zwischen zwei Stationen auf freier Strecke angeordnet sind. Dabei können für die Ankopplung dieser dezentralen Funktionseinheiten DFE möglicherweise die zu weiten Teilen bestehenden Cu-Kabel adernsparend genutzt werden, was am Beispiel der Untergruppe B erläutert wird. Vormals sind beispielsweise die dezentralen Funktionseinheiten DFE1B, DFE2B und DFE3B aus der Station am Netzzugangspunkt 8 angesteuert worden. Entsprechend wurden die übrigen dezentralen Netzzugangspunkte DFEnB aus der Station am Netzzugangspunkt 10 angesteuert. Somit genügte die Herstellung einer Verbindung nur zwischen den dezentralen Funktionseinheiten DFE3B und DFEnB, um die Untergruppe B im Subnetzwerk NB zusammen zu schalten.

Die Systemgrenzen der Einrichtung E können dabei wie folgt beschrieben werden:
- die Anzahl der Netzzugangspunkte 2 bis 16 an dem Transportportnetzwerk OTN ist nur durch die Systemperformance (Stellwerkrechner STW, Transportnetzwerk OTN) begrenzt;
- die Anzahl der DFE's an einem Subnetzwerk A bis E beträgt im Minimum eine DFE: Die maximale Anzahl der anschliessbaren DFE's ist durch die Systemperformance begrenzt (erwünscht sein können z.B. mind. 8 DFE's);
- die Anzahl der Kommunikationseinheiten 18 bis 28 an einem Netzzugangspunkt 6 bis 16 ist im wesentlichen durch die max. Anzahl der Ethernet-Schnittstellen der gewählten Netzzugangspunkte 6 bis 16 begrenzt.
- die max. Anzahl der anschliessbaren Subnetzwerke A bis E an einer Kommunikationseinheit 18 bis 28 kann im gewählten Ausführungsbeispiel vier Subnetzwerke betragen.

Zur Verfügbarkeit kann festgestellt werden, dass:
- ein Subnetzwerk A bis E an zwei Kommunikationseinheiten 18 bis 28 angeschlossen sein muss;
- die zu einem Subnetzwerk A bis E gehörenden Kommunikationseinheiten 18 bis 28 an zwei Netzzugangspunkten angeschlossen sein müssen; dabei können die zwei Netzzugangspunkte 2 bis 16 am gleichen Transportnetzwerk OTN oder an zwei Netzzugangspunkten von zwei unterschiedlichen Transportnetzwerken angeschlossen sein (dieser Fall mit einem zweiten Transportnetzwerk OTN ist hier nicht dargestellt worden, aber technisch ohne weiteres realisierbar).

Um den Performance-Anforderungen zu genügen und mit einfachen Übertragungsmitteln, wie z.B. ISDN, arbeiten zu können, können die Telegramme innerhalb der Subnetzwerke A bis E unterschieden werden in Realtime und Nichtrealtime-Telegramme:
- Realtime Telegramme: Nutzdatentelegramme vom Stellwerk zu den DFE's, keine TCP/IP-Telegramme, spezieller Ethernet-Frametyp;
- Nicht-Realtime Telegramme: normale TCP/IP-Telegramme, keine Nutzdatentelegramme.

Die Telegrammtypen haben feste Timeslots zugeordnet. Die Zuordnung kann während dem Betrieb fix und offline parametrierbar sein, beispielsweise im Verhältnis von mindestens 1 zu 10.

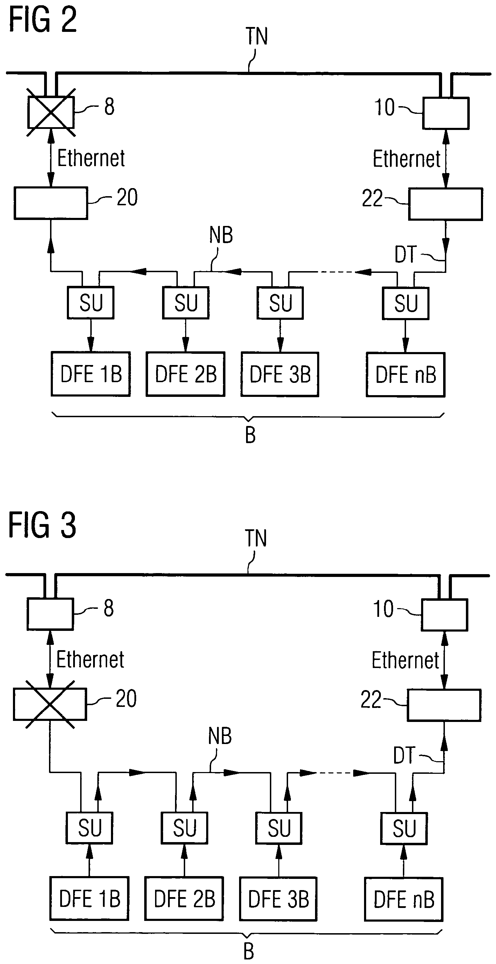

Figur 2 zeigt nun den Ausfall eines Netzzugangspunktes 8, an dem ein Ende des Subnetzwerks NB der Untergruppe B über die Kommunikationseinheit 20 angeschlossen ist. Die Figur 2 illustriert anschaulich, dass für die dezentralen Funktionseinheiten DFE1B bis DFEnB bestimmte Datentelegramme DT (vgl. Richtung der Pfeile auf dem Subnetzwerk NB) nun mehr zwar nur noch über den Netzzugangspunkt 10 und die Kommunikationseinheit 22 zu den dezentralen Funktionseinheiten DFE1B bis DFEnB geführt werden. Trotz des Ausfalls des Netzzugangspunktes 8 können die dezentralen Funktionseinheiten DFE1B bis DFEnB jederzeit erreicht werden, d.h. dieser Ausfall hat wegen der erfindungsgemässen Ausgestaltung der Einrichtung keine betrieblichen Auswirkungen.

Die Figur 3 zeigt für dasselbe Subnetzwerk NB den Ausfall der Kommunikationseinheit 20, was auch hier keine betrieblichen Auswirkungen auf die Erreichbarkeit der dezentralen Funktionseinheiten DFE1B bis DFEnB hat. Die hier andersherum ausgerichteten Pfeile auf dem Subnetzwerk NB sollen illustrieren, dass die dezentralen Funktionseinheiten DFE1B bis DFEnB auch bei dieser Ausfallsituation noch Datentelegramme DT in das Transportnetzwerk OTN einspeisen können.

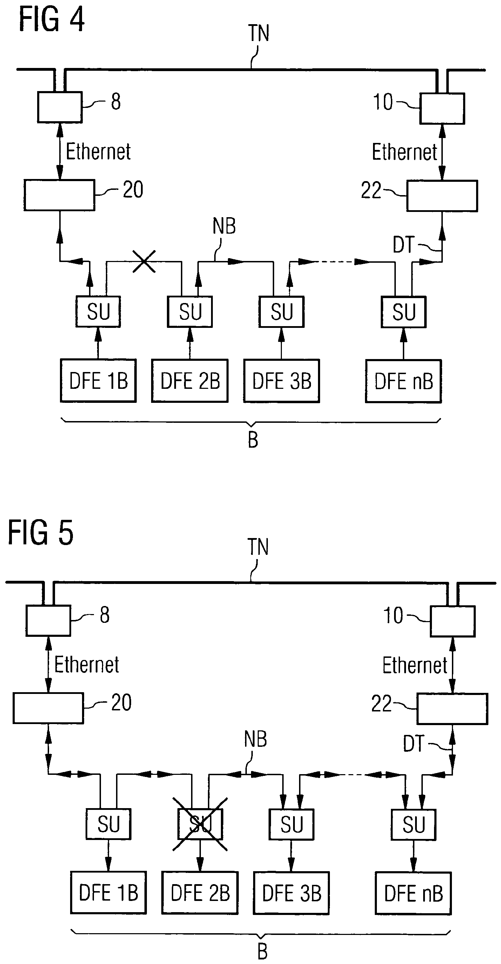

Entsprechend zeigt die Figur 4 nun den Fall eines Unterbruchs des Subnetzwerkes NB, das zwischen den dezentralen Funktionseinheiten DFE1B und DFE2B unterbrochen ist, beispielsweise wegen einer Beschädigung des Netzwerkkabels, wie dies beim Bauarbeiten mitunter vorkommt. Auch hier bleibt jede dezentrale Funktionseinheit erreichbar. DFE1B bleibt weiterhin über die Kommunikationseinheit 20 und den Netzzugangspunkt 8 am Transportnetzwerk OTN; für alle übrigen dezentralen Funktionseinheiten DFE2B bis DFEnB bleibt die Verbindung über die Kommunikationseinheit 22 und den Netzzugangspunkt 10 bestehen.

Abschliessed illustriert die Figur 5 den Ausfall eines Vermittlungsrechners SU. Bei diesem Fall wird nun die dezentrale Funktionseinheit DFE2B von dem Transportnetzwerk OTN getrennt, wenn nicht der Vermittlungsrechner SU redundant ausgestaltet worden ist. Für alle übrigen dezentralen Funktionseinheiten des Subnetzwerkes NB bleibt dieser Fehler jedoch ohne Auswirkungen, was durch die Pfeile für die Datentelegramme DT angedeutet werden soll, die in beiden Richtungen verlaufen

## Patentansprüche

1. Einrichtung (E) zur Steuerung und/oder Überwachung von entlang eines Schienennetzes für Eisenbahnverkehr angeordneten dezentralen Funktionseinheiten (DFE), umfassend:
a) ein übergeordnetes Steuerungssystem (30), das mit den dezentralen Funktionseinheiten (DFE) mittels Datentelegrammen (DT) Informationen austauscht,
b) ein ringförmiges Datentransportnetzwerk (TN) mit einer Anzahl von Netzzugangspunkten (2 bis 16), wobei das übergeordnete Steuerungssystem (30) über mindestens einen Netzzugangspunkt (2, 4) an dem ringförmigen Datentransportnetzwerk (TN) angekoppelt ist;
c) Kommunikationseinheiten (18 bis 28), die an einem Netzzugangspunkt (6 bis 16) angeschlossen sind, wobei:
d) die dezentralen Funktionseinheiten (DFE) zu Untergruppen (A bis E) mit jeweils eigenem Subnetzwerk (NA bis NE) zusammengefasst sind; und wobei
e) das Subnetzwerk (NA bis NE) jeder der Untergruppen (A bis E) an jedem seiner beiden Enden jeweils über eine Kommunikationseinheit (18 bis 28) und über einen Netzzugangspunkt (6 bis 16) an dem ringförmigen Datentransportnetzwerk (TN) angekoppelt ist.

2. Einrichtung nach Anspruch 1,
**dadurch gekennzeichnet, dass**
mittels den dezentralen Funktionseinheiten (DFE) verkehrsüberwachende und verkehrssteuernde Funktionseinheiten an das ringförmige Datentransportnetzwerk (TN) ankoppelbar sind.

3. Einrichtung nach einem der Ansprüche 1 oder 2,
**dadurch gekennzeichnet, dass**
eine erste Anschlussart für eine Untergruppe (A, C, E) von dezentrale Funktionseinheiten (DFE) mit einer ersten mittleren Dichte pro Streckenflächeneinheit und eine zweite Anschlussart für eine Untergruppe (B, D) von dezentralen Funktionseinheiten (DFE) mit einer zweiten mittleren Dichte pro Streckenflächeneinheit vorgesehen sind, wobei die erste mittlere Dichte grösser ist als die zweite mittlere Dichte.

4. Einrichtung nach Anspruch 3,
**dadurch gekennzeichnet, dass**
die erste Anschlussart für in einem Bahnhofsbereich angeordnete dezentrale Funktionseinheiten (DFE) vorgesehen ist, wobei hier die beiden Kommunikationseinheiten (18, 20; 22, 24; 26, 28) und die beiden Netzzugangspunkte (6, 8; 10, 12; 14, 16) für die Ankopplung des Subnetzwerks (A, C, E) räumlich benachbart angeordnet sind.

5. Einrichtung nach Anspruch 3,
**dadurch gekennzeichnet, dass**
die zweite Anschlussart für auf freier Strecke angeordnete dezentrale Funktionseinheiten (DFE) vorgesehen ist, wobei hier die beiden Kommunikationseinheiten (20, 22; 24, 26) und die beiden Netzzugangspunkte (8, 10; 12, 14) für die Ankopplung des Subnetzwerks (B, D) räumlich getrennt angeordnet sind.

6. Einrichtung nach einem der Ansprüche 1 bis 5,
**dadurch gekennzeichnet, dass**
das Subnetzwerk (NA bis NE) aus einer Anzahl von Punkt-zu-Punkt-Verbindungen von logisch benachbarten dezentralen Funktionseinheiten (DFE) aufgebaut ist.

7. Einrichtung nach Anspruch 6,
**dadurch gekennzeichnet, dass**
eine Punkt-zu-Punkt-Verbindung als autonome Übertragungsstrecke innerhalb des Subnetzwerks ausgebildet ist.

8. Einrichtung nach Anspruch 6 oder 7,
**dadurch gekennzeichnet, dass**
die Punkt-zu-Punkt-Verbindung an jedem Ende mit einem Vermittlungsmodul (SU) terminiert wird.

9. Verfahren zur Steuerung und/oder Überwachung von entlang eines Schienennetzes für Eisenbahnverkehr angeordneten dezentralen Funktionseinheiten (DFE), umfassend die Schritte:
a) Bereitstellen eines übergeordnetes Steuerungssystems (30), das mit den dezentralen Funktionseinheiten (DFE) mittels Datentelegrammen (DT) Informationen austauscht,
b) Bereitstellen von einem ringförmigen Datentransportnetzwerk (TN) mit einer Anzahl von Netzzugangspunkten (2 bis 16),
c) Bereitstellen von Kommunikationseinheiten (18 bis 28), die an einem Netzzugangspunkt (6 bis 16) angeschlossen sind,
d) Zusammenfassen der dezentralen Funktionseinheiten (DFE) zu Untergruppen (A bis E) mit jeweils eigenem Subnetzwerk (NA bis NE); und
e) Ankoppeln der Subnetzwerke (NA bis NE) jeder Untergruppe (A bis E) an jedem seiner beiden Enden jeweils über eine Kommunikationseinheit (18 bis 28) und über einen Netzzugangspunkt (6 bis 16) an dem ringförmigen Datentransportnetzwerk (TN).

10. Verfahren nach Anspruch 9,
**dadurch gekennzeichnet, dass**
mittels den dezentralen Funktionseinheiten (DFE) verkehrsüberwachende und verkehrssteuernde Funktionseinheiten an das ringförmige Datentransportnetzwerk (TN) angekoppelt werden.

11. Verfahren nach Anspruche 9 oder 10,
**dadurch gekennzeichnet, dass**
eine erste Anschlussart für eine Untergruppe (A, C, E) von dezentralen Funktionseinheiten (DFE) mit einer ersten mittleren Dichte pro Streckenflächeneinheit und eine zweite Anschlussart für eine Untergruppe (B, D) von dezentralen Funktioneinheiten (DFE) mit einer zweiten mittleren Dichte pro Streckenflächeneinheit vorgesehen wird, wobei die erste mittlere Dichte grösser ist als die zweite mittlere Dichte.

12. Verfahren nach Anspruch 11,
**dadurch gekennzeichnet, dass**
die erste Anschlussart für in einem Bahnhofsbereich angeordnete dezentrale Funktionseinheiten (DFE) vorgesehen wird, wobei hier die beiden Kommunikationseinheiten (18, 20; 22, 24; 26, 28) und die beiden Netzzugangspunkte (6, 8; 10, 12; 14, 16) für die Ankopplung des Subnetzwerks (A, C, E) räumlich benachbart angeordnet sind.

13. Verfahren nach Anspruch 11,
**dadurch gekennzeichnet, dass**
die zweite Anschlussart für auf freier Strecke angeordnete dezentrale Funktionseinheiten (DFE) vorgesehen wird, wobei hier die beiden Kommunikationseinheiten (20, 22; 24, 26) und die beiden Netzzugangspunkte (8, 10; 12, 14) für die Ankopplung des Subnetzwerks (B, D) räumlich getrennt angeordnet sind.

14. Verfahren nach einem der Ansprüche 9 bis 13,
**dadurch gekennzeichnet, dass**
der Datentransport zu und von den dezentralen Funktionseinheiten (DFE) über beide Enden des Subnetzwerk (A bis E) gleichzeitig erfolgt und ein zuerst an der dezentralen Funktionseinheit (DFE) eintreffendes Datentelegramm (DT) und ein zuerst von der dezentralen Funktionseinheit (DFE) an dem übergeordneten Steuerungssystem (30) eintreffendes Datentelegramm (DT) für die weitere Verarbeitung verwertet werden und die übrigen Datentelegramme verworfen werden.

15. Verfahren nach einem der Ansprüche 9 bis 14,
**dadurch gekennzeichnet, dass**
der Datentransport zu und von den dezentralen Funktioneinheiten (DFE) über eines der beiden Enden des Subnetzwerk vorgenommen wird, wobei im Falle eines Ausfalls der Kommunikationseinheit und/oder des Netzzugangspunktes an diesem Ende des Subnetzwerks auf einen Datentransport über das jeweils andere Ende des Subnetzwerkes umgeschaltet wird.

## Claims

1. Device (E) for controlling and/or monitoring decentralised functional units (DFE) arranged along a rail network for rail traffic, comprising:
a) a higher-level control system (30) which exchanges information with the decentralised functional units (DFE) by means of data telegrams (DT),
b) a ring-shaped data transfer network (TN) having a plurality of network access points (2 to 16), wherein the higher-level control system (30) is coupled to the ring-shaped data transfer network (TN) via at least one network access point (2, 4),
c) communication units (18 to 28) which are connected to a network access point (6 to 16), wherein:
d) the decentralised functional units (DFE) are combined to form subgroups (A to E), each with its own subnetwork (NA to NE); and wherein
e) the subnetwork (NA to NE) of each of the subgroups (A to E) is coupled at each of its two ends in each case via a communication unit (18 to 28) and via a network access point (6 to 16) to the ring-shaped data transfer network (TN).

2. Device according to claim 1,
**characterised in that**
traffic monitoring and traffic control functional units can be coupled to the ring-shaped data transfer network (TN) by means of the decentralised functional units (DFE).

3. Device according to one of claims 1 or 2,
**characterised in that**
a first connection type for a subgroup (A, C, E) of decentralised functional units (DFE) having a first average density per line area unit and a second connection type for a subgroup (B, D) of decentralised functional units (DFE) having a second average density per line area unit are provided, wherein the first average density is greater than the second average density.

4. Device according to claim 3,
**characterised in that**
the first connection type is provided for decentralised functional units (DFE) arranged in a station area, wherein the two communication units (18, 20; 22, 24; 26, 28) and the two network access points (6, 8; 10, 12; 14, 16) are here arranged spatially adjacent for coupling the subnetwork (A, C, E).

5. Device according to claim 3,
**characterised in that**
the second connection type is provided for decentralised functional units (DFE) arranged on the open line, wherein the two communication units (20, 22; 24, 26) and the two network access points (8, 10; 12, 14) are here arranged spatially separate for coupling the subnetwork (B, D).

6. Device according to one of claims 1 to 5,
**characterised in that**
the subnetwork (NA to NE) is built up from a plurality of point-to-point connections of logically adjacent decentralised functional units (DFE).

7. Device according to claim 6,
**characterised in that**
a point-to-point connection is embodied as an autonomous transmission path within the subnetwork.

8. Device according to claim 6 or 7,
**characterised in that**
the point-to-point connection is terminated at each end with a switching module (SU).

9. Method for controlling and/or monitoring decentralised functional units (DFE) arranged along a rail network for rail traffic, comprising the steps:
a) providing a higher-level control system (30) which exchanges information with the decentralised functional units (DFE) by means of data telegrams (DT),
b) providing a ring-shaped data transfer network (TN) having a plurality of network access points (2 to 16),
c) providing communication units (18 to 28) which are connected to a network access point (6 to 16),
d) combining the decentralised functional units (DFE) to form subgroups (A to E), each with its own subnetwork (NA to NE); and
e) coupling the subnetworks (NA to NE) of each subgroup (A to E) at each of its two ends in each case via a communication unit (18 to 28) and via a network access point (6 to 16) to the ring-shaped data transfer network (TN).

10. Method according to claim 9,
**characterised in that**
traffic monitoring and traffic control functional units are coupled to the ring-shaped data transfer network (TN) by means of the decentralised functional units (DFE).

11. Method according to claims 9 or 10,
**characterised in that**
a first connection type for a subgroup (A, C, E) of decentralised functional units (DFE) having a first average density per line area unit and a second connection type for a subgroup (B, D) of decentralised functional units (DFE) having a second average density per line area unit is provided, wherein the first average density is greater than the second average density.

12. Method according to claim 11,
**characterised in that**
the first connection type is provided for decentralised functional units (DFE) arranged in a station area, wherein the two communication units (18, 20; 22, 24; 26, 28) and the two network access points ( 6, 8; 10, 12; 14, 16) are here arranged spatially adjacent for coupling the subnetwork (A, C, E) .

13. Method according to claim 11,
**characterised in that**
the second connection type is provided for decentralised functional units (DFE) arranged on the open line, wherein the two communication units (20, 22; 24, 26) and the two network access points (8, 10; 12, 14) are here arranged spatially separate for coupling the subnetwork (B, D).

14. Method according to one of claims 9 to 13,
**characterised in that**
the data transfer to and from the decentralised functional units (DFE) takes place via both ends of the subnetwork (A to E) simultaneously and a data telegram (DT) arriving first at the decentralised functional unit (DFE) and a data telegram (DT) arriving first from the decentralised functional unit (DFE) at the higher-level control system (30) are used for further processing and the remaining data telegrams are discarded.

15. Method according to one of claims 9 to 14,
**characterised in that**
the data transfer is carried out to and from the decentralised functional units (DFE) via one of the two ends of the subnetwork, wherein in the event of a failure of the communication unit and/or of the network access point at this end of the subnetwork a switch is made to a data transfer via the respective other end of the subnetwork.

## Revendications

1. Dispositif (E) de commande et/ou de surveillance d'unités de fonction décentralisées (DFE) disposées le long d'un réseau de transport ferroviaire pour le trafic ferroviaire, comprenant :
a) un système de commande supérieur (30) qui échange des informations avec les unités de fonction décentralisées (DFE) au moyen de télégrammes de données (DT),
b) un réseau de transport de données (TN) en forme d'anneau, comprenant un nombre de points d'accès au réseau (2 à 16), le système de commande supérieur (30) étant couplé au réseau de transport de données (TN) en forme d'anneau par l'intermédiaire d'au moins un point d'accès au réseau (2, 4) ;
c) des unités de communication (18 à 28) qui sont raccordées à un point d'accès au réseau (6 à 16),
d) les unités de fonction décentralisées (DFE) étant regroupées en sous-groupes (A à E) avec respectivement un propre sous-réseau (NA à NE) ; et
e) le sous-réseau (NA à NE) de chacun des sous-groupes (A à E) étant couplé au réseau de transport de données (TN) en forme d'anneau sur chacune de ses deux extrémités respectivement par l'intermédiaire d'une unité de communication (18 à 28) et par l'intermédiaire d'un point d'accès au réseau (6 à 16).

2. Dispositif selon la revendication 1,
**caractérisé en ce que**
des unités de fonction surveillant le trafic et commandant le trafic peuvent être couplées au réseau de transport de données (TN) en forme d'anneau au moyen des unités de fonction décentralisées (DFE).

3. Dispositif selon la revendication 1 ou 2,
**caractérisé en ce qu'**
un premier mode de connexion est ménagé pour un sous-groupe (A, C, E) d'unités de fonction décentralisées (DFE) ayant une première densité moyenne par unité de surface de trajet et **en ce qu'**un deuxième mode de connexion est ménagé pour un sous-groupe (B, D) d'unités de fonction décentralisées (DFE) ayant une deuxième densité moyenne par unité de surface de trajet, la première densité moyenne étant supérieure à la deuxième densité moyenne.

4. Dispositif selon la revendication 3,
**caractérisé en ce que**
le premier mode de connexion est ménagé pour des unités de fonction décentralisées (DFE) disposées dans une zone de gare, les deux unités de communication (18, 20 ; 22, 24 ; 26, 28) et les deux points d'accès au réseau (6, 8 ; 10, 12 ; 14, 16) étant ici disposés de manière spatiale avoisinante pour le couplage du sous-réseau (A, C, E).

5. Dispositif selon la revendication 3,
**caractérisé en ce que**
le deuxième mode de connexion est ménagé pour des unités de fonction décentralisées (DFE) disposées sur un trajet libre, les deux unités de communication (20, 22 ; 24, 26) et les deux points d'accès au réseau (8, 10 ; 12, 14) étant ici disposés de manière spatiale séparée pour le couplage du sous-réseau (B, D).

6. Dispositif selon l'une quelconque des revendications 1 à 5,
**caractérisé en ce que**
le sous-réseau (NA à NE) est établi à partir d'un nombre de liaisons point-à-point d'unités de fonction décentralisées (DFE) logiquement avoisinantes.

7. Dispositif selon la revendication 6,
**caractérisé en ce qu'**
une liaison point à point est réalisée comme trajet de transmission autonome à l'intérieur d'un sous-réseau.

8. Dispositif selon la revendication 6 ou 7,
**caractérisé en ce que**
la liaison point à point est terminée à chaque extrémité par un module de commutation (SU).

9. Procédé de commande et/ou de surveillance d'unités de fonction décentralisées (DFE) disposées le long d'un réseau de transport ferroviaire pour le trafic ferroviaire, comprenant les étampes :
a) mise à disposition d'un système de commande supérieur (30) qui échange des informations avec les unités de fonction décentralisées (DFE) au moyen de télégrammes de données (DT),
b) mise à disposition d'un réseau de transport de données (TN) en forme d'anneau, comprenant un nombre de points d'accès au réseau (2 à 16) ;
c) mise à disposition d'unités de communication (18 à 28) qui sont raccordées à un point d'accès au réseau (6 à 16),
d) regroupement des unités de fonction décentralisées (DFE) en sous-groupes (A à E) avec respectivement un propre sous-réseau (NA à NE) ; et
e) couplage au réseau de transport de données (TN) en forme d'anneau des sous-réseaux (NA à NE) de chacun des sous-groupes (A à E) sur chacune de leurs deux extrémités respectivement par l'intermédiaire d'une unité de communication (18 à 28) et par l'intermédiaire d'un point d'accès au réseau (6 à 16).

10. Procédé selon la revendication 9,
**caractérisé en ce que**
des unités de fonction surveillant le trafic et commandant le trafic sont couplées au réseau de transport de données (TN) en forme d'anneau au moyen des unités de fonction décentralisées (DFE).

11. Procédé selon la revendication 9 ou 10,
**caractérisé en ce qu'**
un premier mode de connexion est ménagé pour un sous-groupe (A, C, E) d'unités de fonction décentralisées (DFE) ayant une première densité moyenne par unité de surface de trajet et **en ce qu'**un deuxième mode de connexion est ménagé pour un sous-groupe (B, D) d'unités de fonction décentralisées (DFE) ayant une deuxième densité moyenne par unité de surface de trajet, la première densité moyenne étant supérieure à la deuxième densité moyenne.

12. Procédé selon la revendication 11,
**caractérisé en ce que**
le premier mode de connexion est ménagé pour des unités de fonction décentralisées (DFE) disposées dans une zone de gare, les deux unités de communication (18, 20 ; 22, 24 ; 26, 28) et les deux points d'accès au réseau (6, 8 ; 10, 12 ; 14, 16) étant ici disposés de manière spatiale avoisinante pour le couplage du sous-réseau (A, C, E).

13. Procédé selon la revendication 11,
**caractérisé en ce que**
le deuxième mode de connexion est ménagé pour des unités de fonction décentralisées (DFE) disposées sur un trajet libre, les deux unités de communication (20, 22 ; 24, 26) et les deux points d'accès au réseau (8, 10 ; 12, 14) étant ici disposés de manière spatiale séparée pour le couplage du sous-réseau (B, D).

14. Procédé selon l'une quelconque des revendications 9 à 13,
**caractérisé en ce que**
le transport de données vers et en provenance des unités de fonction décentralisées (DFE) a lieu simultanément par l'intermédiaire des deux extrémités du sous-réseau (A à E) et **en ce qu'**un télégramme de données (DT) entrant d'abord sur l'unité de fonction décentralisée (DFE) et un télégramme de données (DT) entrant sur le système de commande supérieur (30) d'abord en provenance de l'unité de fonction décentralisée (DFE) sont utilisés pour le traitement ultérieur et **en ce que** les télégrammes de données restants sont rejetés.

15. Procédé selon l'une quelconque des revendications 9 à 14,
**caractérisé en ce que**
le transport de données vers et en provenance des unités de fonction décentralisées (DFE) est réalisé par l'intermédiaire de l'une des deux extrémités du sous-réseau, une commutation, en cas d'une défaillance de l'unité de communication et/ou du point d'accès au réseau sur cette extrémité du sous-réseau, sur un transport de données étant réalisée par l'intermédiaire de l'autre extrémité respective du sous-réseau.
